(19) Europäisches Patentamt European Patent Office Office européen des brevets

(11) **EP 3 750 608 B1**

(12) **EUROPEAN PATENT SPECIFICATION**

(45) Date of publication and mention of the grant of the patent:
**10.09.2025 Bulletin 2025/37**

(21) Application number: **18905673.2**

(22) Date of filing: **23.11.2018**

(51) International Patent Classification (IPC):
*A63F 13/54* *(2014.01)*

(52) Cooperative Patent Classification (CPC):
**A63F 13/54; H04S 7/302;** H04S 2400/11

(86) International application number:
**PCT/CN2018/117149**

(87) International publication number:
**WO 2019/153840 (15.08.2019 Gazette 2019/33)**

(54) **SOUND REPRODUCTION METHOD, STORAGE MEDIUM AND ELECTRONIC DEVICE**

VERFAHREN ZUR TONWIEDERGABE, SPEICHERMEDIUM UND ELEKTRONISCHE VORRICHTUNG

PROCÉDÉ DE REPRODUCTION SONORE, SUPPORT D'INFORMATIONS ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2018 CN 201810135960**

(43) Date of publication of application:
**16.12.2020 Bulletin 2020/51**

(73) Proprietor: **Tencent Technology (Shenzhen) Company Limited Shenzhen, Guangdong, 518057 (CN)**

(72) Inventors:
- **WANG, Junming
  Shenzhen
  Guangdong 5187057, (CN)**
- **QIU, Meng
  Shenzhen
  Guangdong 5187057, (CN)**

- **PAN, Jiaqi
  Shenzhen
  Guangdong 5187057, (CN)**
- **ZHANG, Ya
  Shenzhen
  Guangdong 5187057, (CN)**
- **XIAO, Qinghua
  Shenzhen
  Guangdong 5187057, (CN)**
- **ZHANG, Shuting
  Shenzhen
  Guangdong 5187057, (CN)**

(74) Representative: **Novagraaf International SA Chemin de l'Echo 3 1213 Onex, Geneva (CH)**

(56) References cited:
EP-A1- 1 994 969       EP-A2- 2 332 622
CN-A- 101 472 652     CN-A- 103 096 134
CN-A- 105 879 390     CN-A- 106 843 801
CN-A- 107 360 494     CN-A- 108 597 530
JP-A- 2011 028 169     US-A1- 2004 110 561

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

RELATED APPLICATION

The present disclosure claims priority to Chinese Patent Application No. 2018101359607, filed with the China National Intellectual Property Agency on February 09, 2018 and entitled "METHOD AND APPARATUS FOR SOUND REPRODUCTION, STORAGE MEDIUM, AND ELECTRONIC DEVICE".

FIELD OF THE TECHNOLOGY

The present disclosure relates to the field of computers, and specifically, to a method a storage medium, and an electronic device.

BACKGROUND OF THE DISCLOSURE

Nowadays developers of various terminal applications are paying much attention to audio-visual experience of the users running application clients, for attracting more users to download and use the application clients. Hence, stereo recording is applied to many terminal applications, and a spatialized auditory effect is provided to the users by reproducing spatial sounds via a speaker, so as to provide immersive audio-visual experience for the users.

A large quantity of virtual objects is present in a virtual scene in some man-machine interaction applications, for example, a game application. When sound reproduction is provided according to the aforementioned method, operations are complex, and accuracy and authenticity of sounds reproduced in the virtual scene cannot be ensured.

In other words, there is a problem that accuracy is low in sound reproduction according to methods provided in related technology.

Currently, there is no effective solution proposed for the foregoing problem.

US 2004/0110561 A1 discloses a video game apparatus that includes a CPU, and the CPU generates a game screen when a player character is moved while a game is being played. In addition, the CPU executes a sound control process of a sound produced by a sound object displayed on the game screen. That is, the CPU, when a plurality of the sound objects of the same kind exist on the game screen, calculates sound volume data of the sounds produced by the respective sound objects, and divides the calculated sound volume data into components of right sound volume data, left sound volume data, and surround sound volume data. Furthermore, out of the respective components regarding all the sound objects, maximum components are extracted, and localization data and the sound volume data of the sound to be output are calculated. Based on the calculated localization data and the sound volume data, the sound of the sound object is output.

EP 1 994 969 A1 discloses a first sound volume calculation unit that obtains a length of a straight line connecting a sound emitting object and a sound detection object, and calculates a first sound volume attenuated from a predetermined reference sound volume in accordance with the length. A second volume calculation unit in a case where on the straight line there is an other object that is an obstacle, calculates a second sound volume attenuated from the first sound volume by a predetermined ratio. A third volume calculation unit draws from each of the sound emitting object and the sound detection object a plurality of space recognition lines that spread in plane and at a predetermined angle from the straight line locating as a center, and calculates a third sound volume attenuated from either one of the first sound volume and the second sound volume in accordance with an attenuation ratio determined by the number of the space recognition lines having a same angle and intersecting with each other without being intercepted by the other object that is an obstacle. An output sound control unit outputs game sound based on the calculated third sound volume.

EP 2 332 622 A2 discloses to improve a processing speed by combining simple sound source species with a basic configuration and processing the combination as a single sound source, when sound sources and sound fields are placed and formed in a three-dimensional virtual space.

JP2011028169A disclose an equivalent sound effect generation circuit that includes: a filter circuit for performing low pass filter (LPF) processing; reverberation circuits and for generating reverberation signals of original signals on land and under water; a sound volume adjusting circuit for adjusting the sound volumes of the original signals or the reverberation signals; and signal mixing circuits for mixing the reverberation signal to the original signal.

SUMMARY

A method for sound reproduction, a storage medium, and an electronic device are provided according to embodiments of the present disclosure, to address at least a technical problem that accuracy is low in sound reproduction according to methods provided in related technology.

The invention is defined by the independent claims. The dependent claims concern optional features of some embodiments of the invention.

In embodiments of the present disclosure, the terminal detects a sound triggering event within a range for sound-source detection of a first virtual object. Accordingly, the terminal determines a sound-source position based on sound-source feature information in the sound triggering event, and obtains a first transmission distance between the sound-source position and a first position at which the first virtual object is located. The terminal determines a to-be-reproduced target sound according to the first transmission distance. The terminal detects the sound triggering event within the range for sound-source detection according to the foregoing method for reproduction of the target sound. In a case that the sound triggering event is detected, the terminal determines a sound-source accurately according to the sound-source feature information in the detected sound triggering event, and obtains the target sound to be generated at the first position in the virtual scene accurately according to a position relationship between the sound-source and the first virtual object. A means of obtaining a reproduced sound is no longer limited to reproduction solely from recording. Therefore, achieved is a technical effect that accuracy is improved in sound reproduction in a virtual scene, and addressed is a technical issue that accuracy is low in sound reproduction according to methods provided in related technology.

BRIEF DESCRIPTION OF THE DRAWINGS

The accompanying drawings described herein are used for providing a further understanding of the present disclosure, and constitute a part of the present disclosure. Exemplary embodiments of the present disclosure and descriptions thereof are used for explaining the present disclosure, and do not constitute any improper limitation to the present disclosure. The accompanying drawings are as follows.

Figure 1 is a schematic diagram of an application environment of a method for sound reproduction according to an embodiment of the present disclosure;

Figure 2 is a schematic flowchart of an optional method for sound reproduction according to an embodiment of the present disclosure;

Figure 3 is a schematic diagram of an optional method for sound reproduction according to an embodiment of the present disclosure;

Figure 4 is a schematic diagram of another optional method for sound reproduction according to an embodiment of the present disclosure;

Figure 5 is a schematic diagram of another optional method for sound reproduction according to an embodiment of the present disclosure;

Figure 6 is a schematic diagram of another optional method for sound reproduction according to an embodiment of the present disclosure;

Figure 7 is a schematic diagram of another optional method for sound reproduction according to an embodiment of the present disclosure;

Figure 8 is a schematic diagram of another optional method for sound reproduction according to an embodiment of the present disclosure;

Figure 9 is a schematic structural diagram of an optional apparatus for sound reproduction according to an embodiment of the present disclosure; and

Figure 10 is a schematic structural diagram of an optional electronic device according to an embodiment of the present disclosure.

DESCRIPTION OF EMBODIMENTS

To make the object, technical solutions and advantages of the present application clearer, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

The terms such as "first" and "second" in the specification, claims, and the foregoing accompanying drawings of the present disclosure are intended to distinguish between similar objects rather than describe a particular sequence or a chronological order. It is understood that the data termed in such a way are interchangeable in proper circumstances, so that the embodiments of the present disclosure described herein can be implemented with orders besides the order illustrated or described herein. In addition, the terms "include", "comprise" and any other variants thereof are intended to cover the non-exclusive inclusion. For example, a process, a method, a system, a product, or a device that includes a series of steps or units is not necessarily limited to those explicitly listed steps or units, but may include other steps or units that are not explicitly listed or that are inherent to such process, method, product, or device.

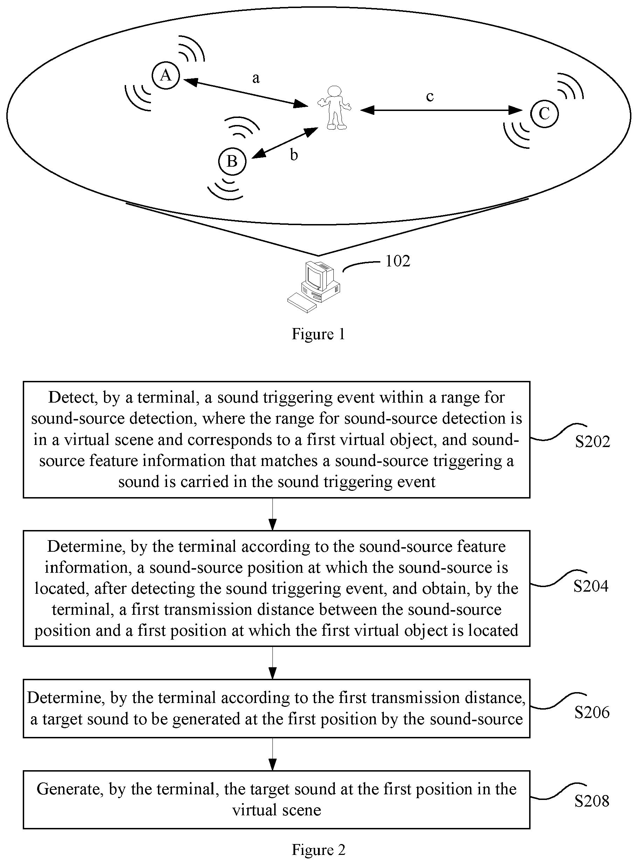

A method for sound reproduction is provided according to an aspect of the embodiments of the present disclosure. Optionally, the method for sound reproduction may be applied to, but is not limited to, an application environment as shown in Figure 1. In a virtual scene for a terminal 102, a sound triggering event is detected within a range for sound-source detection of a first virtual object. Positions of a sound-source A, a sound-source B, and a sound-source C are determined according to sound-source feature information carried in the sound triggering event. A distance a from the sound-source A to the first virtual object is obtained according to the position of the sound-source A. A distance b from the sound-source B to the first virtual object is obtained according to the position of the sound-source B. A distance c from the sound-source C to the first virtual object is obtained according to the position of the sound-source C. A corresponding target sound to be generated at a first position, at which the first virtual object is located, is determined according to the distance a, the distance b, and the distance c. The target sound is generated at the first position.

Optionally, the terminal in this embodiment may include, but is not limited to, at least one of: a mobile phone, a tablet computer, a notebook computer, or the like.

Optionally, the method for sound reproduction may include following steps S202, S204, S206, and S208, in an optional implementation as shown in Figure 2.

In step S202, a terminal detects a sound triggering event within a range for sound-source detection, where the range for sound-source detection is in a virtual scene and corresponds to a first virtual object, and sound-source feature information that matches a sound-source triggering a sound is carried in the sound triggering event.

In step S204, the terminal determines a sound-source position at which the sound-source is located, according to the sound-source feature information, after detecting the sound triggering event, and the terminal obtains a first transmission distance between the sound-source position and a first position at which the first virtual object is located.

In step S206, the terminal determines a target sound to be generated at the first position by the sound-source, according to the first transmission distance.

In step S208, the terminal generates the target sound at the first position in the virtual scene.

Optionally, the method for sound reproduction may be applied to, but is not limited to, a process of sound reproduction in a virtual scene. For example, the method may be applied to a virtual scene displayed in a game application. The game application may include, but is not limited to, a multiplayer online battle arena (MOBA) or a single-player game (SPG), where no specific limitation is imposed herein. The game application may include, but is not limited to, at least one of: a three-dimensional (3D) game application, a virtual reality (VR) game application, an augmented reality (AR) game application, or a mixed reality (MR) game application. The virtual scene may be, but is not limited to, an interaction scene configured in the game application. For example, the virtual scene may be in a racing game and include a track and an endpoint, or may be in a shooting game and include a target. The target may be a virtual object (which be referred to as a virtual character) controlled by another online player who also participates in an MOBA, may be a non-player character (NPC), or may be a machine character in man-machine interaction. In addition, the virtual scene may, but is not limited to, further include another object for advancing a plot, for example, a house, a traffic tool, weather, or natural landscape, which is configured to simulate a real environment. The foregoing description is merely an example, and this embodiment is not limited thereto.

A game application is taken an example for illustration. It is assumed that the first virtual object (for example, a virtual character S1) is controlled by a client of a current game application, the virtual scene of the game application is related to shooting, and the virtual scene includes different virtual objects. A terminal detects a sound triggering event carrying sound-source feature information that matches a sound-source triggering a sound, within a range for sound-source detection corresponding to the virtual character S1. In a case that the sound triggering event is detected, the terminal determines a sound-source position at which the sound-source (for example, a sound-source A) is located, according to the sound-source feature information. The terminal further obtains a first transmission distance between the sound-source position and a first position, at which the virtual character S1 is located. Accordingly, a target sound to be generated at the first position by the sound-source is accurately determined according to the first transmission distance. An objective is achieved that the determined target sound is accurately reproduced at the first position in the virtual scene.

In this embodiment, the terminal detects the sound triggering event within the range for sound-source detection according to the foregoing method for reproduction of the target sound. In a case that the sound triggering event is detected, the terminal determines a sound-source accurately according to the sound-source feature information in the detected sound triggering event, and obtains the target sound to be generated at the first position in the virtual scene accurately according to a position relationship between the sound-source and the first virtual object. A means of obtaining a reproduced sound is no longer limited to reproduction solely from recording. Therefore, achieved is a technical effect that accuracy is improved in sound reproduction in a virtual scene. Moreover, sounds of different sound-sources are reproduced at the first position according to different position information. Thereby, flexibility of sound reproduction is improved, and an accurate result of sound reproduction is further ensured.

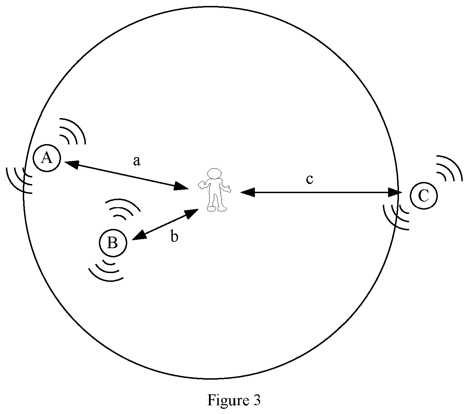

An example is illustrated with reference to Figure 3. The big circle shown in Figure 3 represents a range for sound-source detection corresponding to a first virtual object (a virtual character S1). It is assumed that two sound-sources A and B are located within the range for sound-source detection of the virtual character S1, and a sound-source C is located outside the range for sound-source detection of the virtual character. Hence, a terminal can detect the sound-source A and the sound-source B, but cannot detect the sound-source C, when the first virtual object controlled by a game application client detects the sound triggering event. Further, the terminal obtains sound-source positions of the sound-source A and the sound-source B, and then obtains a transmission distance a from the sound-source A to the virtual character S1 and a transmission distance b from the sound-source B to the virtual character S1 according to the sound-source positions. Target sounds, which are from the sound-source A and the sound-source B and reproducible at a position at which the virtual character S1 is located (a position at the center of the circle shown in Figure 3), may be further determined according to the transmission distance a and the transmission distance b. The target sounds are generated.

the terminal determines the target sound to be generated at the first position by the sound-source according to the first transmission distance includes following steps. The terminal determines a virtual environment in the virtual scene, where the first virtual object is currently located in the virtual environment. The terminal obtains a sound curve of the sound-source, where the sound curve matches the virtual environment, and the sound curve indicates a correspondence between the sound triggered by the sound-source and a transmission distance. The terminal determines the target sound matching the first transmission distance, based on the sound curve.

The sound curve may include, but is not limited to: (1) a correspondence between a volume of the sound triggered by the sound-source and the transmission distance; and (2) a correspondence between a pitch of the sound triggered by the sound-source and the transmission distance. The foregoing description is merely an example. Temporal information may further be fused into the sound curve, which represents a relationship among the sound triggered by the sound-source, the transmission distance, and time. This embodiment is not limited thereto.

the terminal determines the target sound to be generated at the first position by the sound-source according to the first transmission distance may include following steps. The terminal determines a sound-source type of the sound-source, obtains a sound curve matching the sound-source type for the sound-source, and determines the target sound matching the first transmission distance based on the sound curve.

Optionally, the sound-source type in this embodiment may be configured, but not limited, to determine the sound curve that is applied. In other words, different sound curves are set in correspondence to different sound-source types.

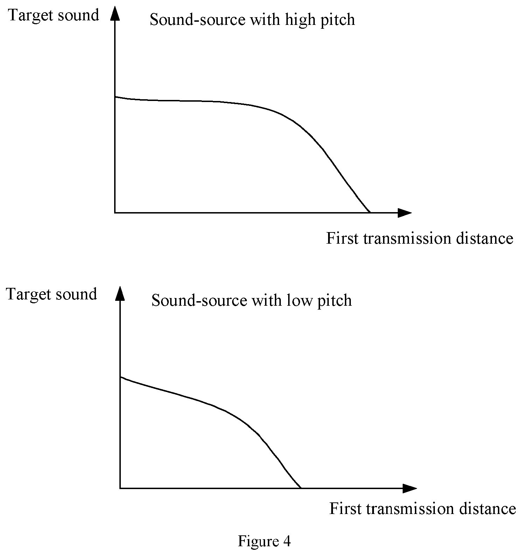

Specific illustration is made with reference to Figure 4. Figure 4 shows two types of sound curves. A first type of the sound curve is for a high pitched sound, which attenuates slowly and transmits for a long distance. A second type of the sound curve is for a low pitched sound, which attenuates fast and transmits for a short distance. After obtaining a type of the sound-source, the terminal matches different sound curves according to different sound-source types, and a target sound matching the first transmission distance is determined according to a corresponding sound curve. The sound curves for the high-pitched sound and the low-pitched sound as shown in Figure 4 are merely examples, and the present disclosure is not limited thereto.

Optionally, that the terminal determines the sound-source position at which the sound-source is located according to the sound-source feature information and obtains the first transmission distance between the sound-source position and the first position at which the first virtual object is located includes following steps. The terminal extracts a sound-source coordinate indicating the sound-source position, from the sound-source feature information. The terminal calculates the first transmission distance based on the sound-source coordinate and a position coordinate corresponding to the first position.

Optionally, that the terminal determines the sound-source position at which the sound-source is located according to the sound-source feature information in this embodiment includes a following step. The terminal extracts a sound-source coordinate of the sound-source, from the sound-source feature information. That is, the terminal may directly extract a carried sound-source coordinate from the sound-source feature information that matches each sound-source, after the sound triggering event is detected. For example, corresponding sound-source coordinates such as $(x_A, y_A)$ may be extracted, after a sound-source A is detected.

Optionally, that the terminal obtains a first transmission distance between the sound-source position and a first position at which the first virtual object is located in this embodiment may be, but is not limited to, a following step. The terminal obtains a distance between the sound-source coordinate and a coordinate of the first position. For example, it is assumed that coordinates of the first position are $(x_1, y_1)$, and a distance between the two pairs of coordinates can be obtained. Not only a distance from the first position at which the first virtual object is located to a position of the sound-source can be obtained, but also a direction of the sound-source with respect to the first virtual object can be obtained.

Therefore, a position change of the sound-source with respect to the first virtual object can be accurately determined. An objective is achieved that the target sound to be generated at the first position by the sound-source is accurately determined based on the sound curve, according to the position change.

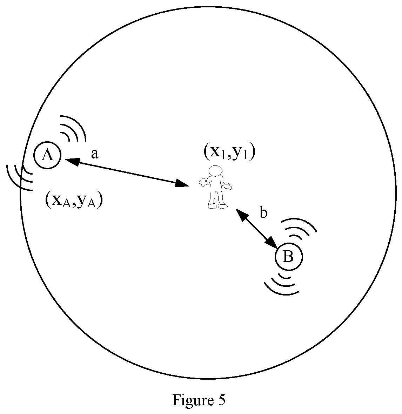

Specific illustration is made with reference to Figure 5. The big circle shown in Figure 5 is a range for sound-source detection of a first virtual object (for example, a virtual character S1). It is assumed that sound-sources indicated by a sound triggering event detected by the virtual character S1 within the range for sound-source detection include a sound-source A and a sound-source B. The sound-source A is taken as an example. A terminal may extract sound-source coordinates $(x_A, y_A)$ corresponding to the sound-source A, obtain coordinates $(x_1, y_1)$ of a first position at which the virtual character S1 is located, and calculate a transmission distance (that is, the first transmission distance)

$$s = \sqrt{(y_1 - y_A)^2 + (x_1 - x_A)^2}$$ between the sound-source A and the first position according to the coordinates.

Content as shown in Figure 5 herein is merely an example for description, and the present disclosure is not limited thereto.

Optionally, that the terminal generates the target sound at the first position in the virtual scene includes following steps. In response to a quantity of detected sound-sources being one, the terminal determines the target sound to be generated at the first position by the sound-source, and generates the target sound at the first position. In response to a quantity of detected sound-sources being at least two, the terminal determines object target sounds to be generated at the first position by at least two sound-sources, respectively, synthesizes the object target sounds to obtain the target sound, and generates the target sound at the first position.

in response to a quantity of sound-sources detected by the terminal being at least two, the target sound may be obtained according to at least one of the following strategies.

(1) The terminal synthesizes the object target sounds to be generated at the first position by the sound-sources, based on preset proportions, to obtain the target sound.
(2) The terminal obtains the target sound from the object target sounds to be generated at the first position by the sound-sources, based on preset priorities.
(3) The terminal obtains the target sound randomly from the object target sounds to be generated at the first position by the sound-sources.

For example, an obtaining strategy is set to be removing an explosion sound. In a case that the terminal detects an explosion sound, the explosion sound may be removed, and the object target sounds to be generated at the first position by the other sound-sources are synthesized to obtain the target sound. For another example, a waterfall sound is set with a highest priority. In a case that the terminal detects a waterfall sound, only the waterfall sound is generated at the first position, and the object target sounds to be generated at the first position by the other sound-sources are neglected and not generated.

Optionally, that the terminal detects the sound triggering event may include, but is not limited to, at least one of the following steps. The terminal detects whether the first virtual object performs a sound triggering action, where the sound triggering action is configured to generate the sound triggering event. The terminal detects whether a second virtual object interacting with the first virtual object triggers the sound triggering event, where the second virtual object is controlled by the first virtual object. The terminal detects whether a third virtual object triggers a sound triggering event, where a fourth virtual object configured to control the third virtual object is associated with the first virtual object in the virtual scene. The terminal detects whether there is an object triggering an environmental sound in the virtual environment in which the first virtual object is currently located, where the object triggering the environmental sound is configured to trigger the sound triggering event according to a predetermined period.

The first virtual object and the fourth virtual object may be, but are not limited to, objects corresponding to virtual characters that are controlled in the virtual scene via application clients. An association relationship between the first virtual object and the fourth virtual object may include, but is not limited to: comrades, enemies, or other association relationships in a same virtual scene.

In addition, the second virtual object may be, but is not limited to, an object controlled by the first virtual object, for example, equipment (such as a door, a vehicle, or a gun) in the virtual scene. The third virtual object may be, but is not limited to, an object controlled by the fourth virtual object, for example, equipment (such as a door, a vehicle, or a gun) in the virtual scene. The first to fourth virtual objects merely represents different virtual objects, and there is no limitation on numbers or a sequence of the virtual objects.

Optionally, the method further includes a followings step, before the terminal detects the sound triggering event. The terminal sets a sound effect for a virtual object in the virtual environment, where the sound effect is associated with an attribute of the virtual object, and the sound triggering event is generated after the virtual object performs a triggering operation.

In this embodiment, the attribute may include but is not limited to a material of the virtual object. Virtual objects of different materials may, but are not limited to, be configured with different sound effects. For example, different sound effects are configured for a rock and a metal in the virtual scene, to simulate sounds of real natural objects.

In embodiments of the present disclosure, the terminal detects a sound triggering event within a range for sound-source detection of a first virtual object. Accordingly, a sound-source position is determined based on sound-source feature information in the sound triggering event, and a first transmission distance between the sound-source position and a first position at which the first virtual object is located is obtained. The terminal determines a to-be-reproduced target sound according to the first transmission distance. The sound triggering event is detected within the range for sound-source detection according to the foregoing method for reproduction of the target sound. In a case that the sound triggering event is detected, a sound-source is accurately determined according to the sound-source feature information in the detected sound triggering event, and the target sound to be generated at the first position in the virtual scene is accurately obtained according to a position relationship between the sound-source and the first virtual object. A means of obtaining a reproduced sound is no longer limited to reproduction solely from recording. Therefore, achieved is a technical effect that accuracy is improved in sound reproduction in a virtual scene, and addressed is an issue that accuracy is low in sound reproduction in related technology.

In an optional implementation, that the terminal determines the target sound to be generated at the first position by the sound-source according to the first transmission distance includes following steps S1 to S3.

In step S1, the terminal determines a virtual environment in the virtual scene, where the first virtual object is currently located in the virtual environment.

In step S2, the terminal obtains a sound curve of the sound-source, where the sound curve matches the virtual environment, and the sound curve indicates a correspondence between the sound triggered by the sound-source and a transmission distance.

In step S3, the terminal determines the target sound matching the first transmission distance, based on the sound curve.

Optionally, a correspondence between the virtual environment and the sound curve of the sound-source may be preset, and the sound curve matching the virtual environment is obtained according to different virtual environments.

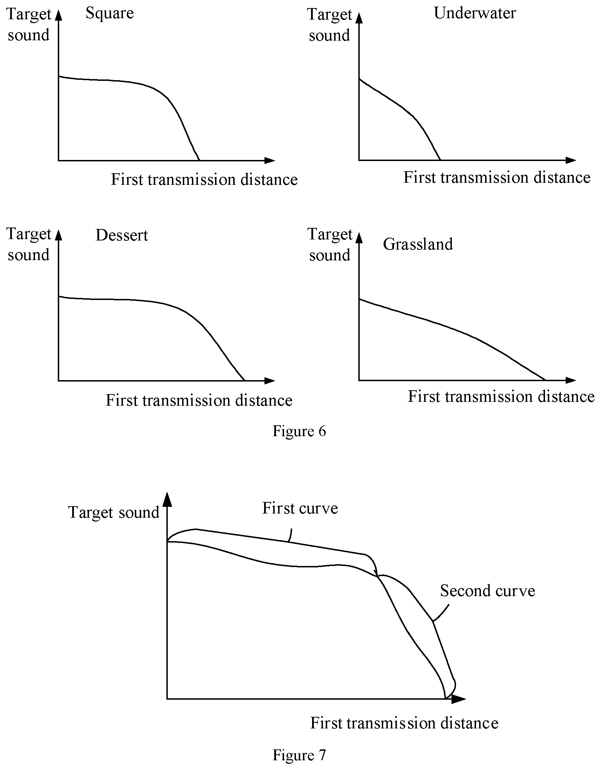

For example, the virtual environments may be a square, underwater, a dessert, and grassland. Illustration is made with reference to Figure 6 which shows four types of sound curves, and each type of the sound curves corresponds to one or more environments. At the upper-left corner is a sound curve of a square. At the upper-right corner is a sound curve of underwater. At lower-left corner is a sound curve of a dessert. At a lower-right corner is a sound curve of grassland. The terminal obtains different sound curves according to different environments, and obtains target sounds according to the different sound curves.

The virtual environment being the square, the underwater, the dessert, or the grassland is merely an example. The virtual environments may be other environments. The four sound curves in Figure 6 are merely for illustration, and a specific contour of the sound curve is required to be set according to practice.

In this embodiment, different sound curves are set for different environments, such that a sound-source provides different target sounds in different environments. Achieved is an effect that the target sound is adjusted with a change in the environment, improving accuracy of sound reproduction.

In an optional implementation, the method includes a following step S1, before the terminal detects the sound triggering event.

In step S1, the terminal sets a sound curve for the sound-source, where the sound curve includes a first curve and a second curve, the first curve indicates a curve section in which the sound triggered by the sound-source does not attenuate, and the second curve indicates a curve section in which the sound triggered by the sound-source attenuates.

A game application is further taken as an example for illustration. For example, the sound-source may be a virtual object in a game. In a case that the virtual object makes a sound such as a gunshot and a roar, the sound attenuates slowly within a certain distance, which follows the first curve in Figure 7. The sound attenuates fast when exceeding such distance, which follows the second curve in Figure 7.

A rate of attenuation and a boundary for the first curve and the second curve are different for different sounds made by the sound-source.

For example, the sound-source is an automobile of which a sound transmits for a long distance, and thereby the first curve is long. The sound does not start attenuating fast to follow the second curve, until transmitting for a long distance. In a case that the sound-source is a bicycle of which a sound transmits a short distance, the first curve is shorter. The sound starts to attenuate fast to follow the second curve, after transmitting for a short distance.

The foregoing example and the content in Figure 7 are merely for explaining the present disclosure, and the present disclosure is not limited thereto.

In this embodiment, a first curve and a second curve are configured in the sound curve for the sound-source. Hence, the sound attenuates faster after transmitting for a certain distance, and accuracy of sound reproduction is improved.

In an optional implementation, that the terminal determines the target sound matching the first transmission distance based on the sound curve includes following steps.

In step S1, the terminal obtains, based on the sound curve, an attenuation distance of the sound-source, where the sound triggered by the sound-source is not reproduced after transmitting for the attenuation distance.

In step S2, the terminal determines the target sound matching the first transmission distance, in response to the first transmission distance being less than the attenuation distance.

A game application is further taken as an example for illustration. The first virtual object may be a virtual character controlled by a user, and the sound-source may be a traffic tool in a game. The terminal obtains a target sound based on a sound curve corresponding to a sound made by the traffic tool, in a case that the sound made by the traffic tool in the game is located within a range for sound-source detection of the virtual character. In a case that the traffic tool is too far away from the virtual character, the target sound is zero in value, as shown in Figure 7. Even if the sound made by the traffic tool is detected by the terminal, the sound is not heard by the virtual character in such case since the distance is too long. In a case that the target sound corresponding to the transmission distance between the traffic tool and the virtual character is not zero, the virtual character can hear the sound made by the traffic tool.

In this embodiment, it is determined based on the attenuation distance whether to reproduce a target sound. Thereby, the target sound is not reproduced in a case that a first transmission distance is too long, which improves accuracy of sound reproduction.

In an optional implementation, that the terminal determines the sound-source position at which the sound-source is located according to the sound-source feature information and obtains the first transmission distance between the sound-source position and the first position at which the first virtual object is located includes following steps S1 and S2.

In step S1, the terminal extracts a sound-source coordinate indicating the sound-source position, from the sound-source feature information.

In step S2, the terminal calculates the first transmission distance based on the sound-source coordinate and a position coordinate corresponding to the first position.

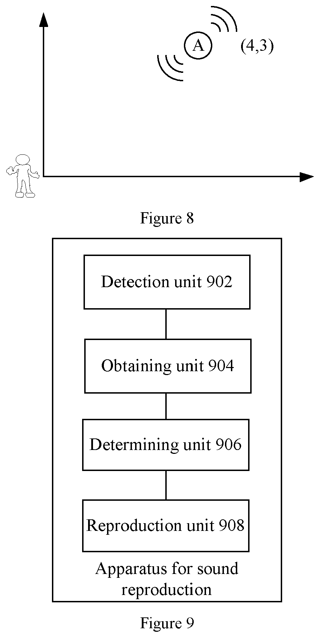

Optionally, a game application is further taken an example for illustration. The first virtual object may be a virtual character in the game, and the sound-source may be a traffic tool. As shown in Figure 8, a two-dimensional coordinate system is established in a plane in which the virtual character is located, and coordinates of a position at which a traffic tool A is located in the two-dimensional coordinate system are (4, 3). The terminal calculates a distance from the traffic tool to the virtual character based on the coordinates at which the traffic tool is located, and a result of the calculation is 5.

In this embodiment, the coordinate of the sound-source is obtained through establishing a coordinate system, and the first transmission distance from the sound-source to the first virtual object is calculated. Thereby, the target sound may be accurately adjusted based on the first transmission distance, improving accuracy of sound reproduction.

In an optional implementation, that the terminal generates the target sound at the first position in the virtual scene includes following steps S1 and S2.

In step S1, the terminal determines the target sound to be generated at the first position by the sound-source, and generates the target sound at the first position, in response to a quantity of detected sound-sources being one.

In step S2, the terminal determines object target sounds to be generated at the first position by at least two sound-sources, respectively, synthesizes the object target sounds to obtain the target sound, and generates the target sound at the first position, in response to a quantity of detected sound-sources being at least two.

Optionally, that the terminal synthesizes the object target sounds to obtain the target sound includes at least one of following steps S21 to S23.

In step S21, the terminal synthesizes the object target sounds based on preset proportions, to obtain the target sound.

In step S22, the terminal obtains the target sound from the object target sounds, based on preset priorities.

In step S23, the terminal obtains the target sound randomly from the object target sounds.

Optionally, the terminal may set a proportion of synthesis for each object target sound. The terminal synthesizes multiple object target sounds as the target sound based on the proportion of synthesis set for each object target sound, in a case that the multiple object target sounds are obtained.

A game application is further taken as an example for illustration. The sound-source may be a traffic tool, wind, a handgun, or the like in the game. The proportions of synthesis are 0.3, 0.2, and 0.5 for sounds of the traffic tool, the wind, and the handgun, respectively. In a case that the terminal obtains object target sounds of the traffic tool, wind, and handgun, the object target sounds are multiplied by the corresponding proportions of synthesis, and then the multiplied object target sounds are synthesized as the target sound.

Optionally, the terminal may set priorities for the sounds of the sound-source. Sounds of different sound-sources correspond to different priorities. A sound made by the sound-source of a high priority is preferentially heard in the target sound. A sound made by the sound-source of a low priority is not heard or is weakened, when there is the sound made by the sound-source of a high priority.

A game application is further taken as an example for illustration. The sound-source may be a traffic tool or a handgun. A priority of the handgun is higher than that of the traffic tool. The terminal obtains the object target sounds of the handgun and the traffic tool. Since the priority of the handgun is higher, a sound of the handgun is louder than that of the traffic tool, or a sound of the traffic tool cannot be heard in the target sound.

In this embodiment, the target sound is obtained through different methods. Flexibility is improved in obtaining the target sound, and achieved is an effect that flexibility is improved in sound reproduction.

In an optional implementation, that the terminal detects the sound triggering event includes at least one of following steps S1 to S4.

In step S1, the terminal detects whether the first virtual object performs a sound triggering action, where the sound triggering action is configured to generate the sound triggering event.

In step S2, the terminal detects whether a second virtual object interacting with the first virtual object triggers the sound triggering event, where the second virtual object is controlled by the first virtual object.

In step S3, the terminal detects whether a third virtual object triggers the sound triggering event, where a fourth virtual object configured to the third virtual object is associated with the first virtual object in the virtual scene.

In step S4, the terminal detects whether there is an object triggering an environmental sound in the virtual environment in which the first virtual object is currently located, where the object triggering the environmental sound is configured to trigger the sound triggering event according to a predetermined period.

A game application is further taken as an example for illustration. The first virtual object may be a virtual character controlled by a first user. The second virtual object may be a weapon of a virtual character controlled by the first user. The fourth virtual object may be a virtual character controlled by another user. The third virtual object may be a weapon of a virtual character controlled by another user. The object triggering the environmental sound may be wind, rain, or the like.

For example, a virtual character controlled by the first user triggers the sound triggering event in a game, in a case that the first virtual character moves and makes a sound under control of the first user. A weapon triggers the sound triggering event, in a case that the virtual character uses the weapon under control of the first user. A virtual character controlled by another user triggers the sound triggering event, in a case that the virtual character moves and makes a sound under control of the another user. A weapon triggers the sound triggering event, in a case that the virtual character uses the weapon under control of the another user. A wind triggers the sound triggering event, in a case that there is the wind in the environment.

In this embodiment, a terminal detects whether the sound triggering event is triggered by a first virtual object, a second virtual object, a third virtual object, or a virtual environment in which the virtual object is located. Thereby, achieved is an objective that the sound triggering event is accurately detected, so as to obtain the target sound according to the sound triggering event. Accuracy is improved in sound reproduction.

In an optional implementation, the method further includes a following step S1 before the terminal detects the sound triggering event.

In step S1, the terminal sets a sound effect for a virtual object in the virtual scene, where the sound effect is associated with an attribute of the virtual object, and the sound triggering event is generated after the virtual object performs a triggering operation.

A game application is further taken an example for illustration. The virtual object may be a virtual character, a virtual item, or the like in a game. For example, the virtual object may be a weapon, a traffic tool, or the like. A sound effect is correspondingly generated when the virtual character moves, uses the weapon, or uses the traffic tool. The terminal sets different sound effects according to different types of the virtual character or the virtual item. For example, different sound effects are set for the traffic tool being an automobile and the traffic tool being a bicycle.

In this embodiment, the sound effect is set for the virtual object. Thereby, the set sound effects can be checked and synthesized to obtain the target sound, and flexibility is improved in sound reproduction.

For brief description, the method in the above embodiments is described as a combination of a series of actions. Those skilled in the art should appreciate that the present disclosure is not limited to the described order of the actions, because some steps according to the present disclosure may be performed in another order or simultaneously. In addition, those skilled in the art should appreciate that all embodiments described in the specification is an optional embodiment, in which a related action or a related module may not be necessary for the present disclosure.

According to the foregoing description of implementations, those skilled in the art may clearly appreciate that the method according to the above embodiments may be implemented via software plus a necessary general hardware platform, or may be implemented via hardware. In most cases, the former implementation is better. Based on such understanding, the essence or the part contributing to the related art in technical solutions of the present disclosure may be implemented in a form of a software product. The computer software product is stored in a storage medium (such as ROM/RAM, a magnetic disk, or an optical disc), and includes several instructions to enable a terminal device (which may be a mobile phone, a computer, a server, a network device, and the like) to perform each method described in embodiments of the present disclosure.

An apparatus for sound reproduction is further provided according to another aspect of embodiments of the present disclosure. The apparatus is configured to perform the foregoing method for sound reproduction, and is applied to a terminal. As shown in Figure 9, the apparatus includes a detection unit 902, an obtaining unit 904, a determining unit 906, and a reproduction unit 908.

The detection unit 902 is configured to detect a sound triggering event within a range for sound-source detection, where the range for sound-source detection is in a virtual scene and corresponds to a first virtual object, and sound-source feature information that matches a sound-source triggering a sound is carried in the sound triggering event.

The obtaining unit 904 is configured to determine a sound-source position at which the sound-source is located, according to the sound-source feature information, after the sound triggering event is detected, and obtain a first transmission distance between the sound-source position and a first position at which the first virtual object is located.

The determining unit 906 is configured to determine a target sound to be generated at the first position by the sound-source, according to the first transmission distance.

The reproduction unit 908 is configured to generate the target sound at the first position in the virtual scene.

Optionally, the method for sound reproduction may be applied to, but is not limited to, a process of sound reproduction in a virtual scene. For example, the method may be applied to a virtual scene displayed in a game application. The game application may include, but is not limited to, a multiplayer online battle arena (MOBA) or a single-player game (SPG), where no specific limitation is imposed herein. The game application may include, but is not limited to, at least one of: a three-dimensional (3D) game application, a virtual reality (VR) game application, an augmented reality (AR) game application, or a mixed reality (MR) game application. The virtual scene may be, but is not limited to, an interaction scene configured in the game application. For example, the virtual scene may be in a racing game and include a track and an endpoint, or may be in a shooting game and include a target. The target may be a virtual object (which be referred to as a virtual character) controlled by another online player who also participates in an MOBA, may be a non-player character (NPC), or may be a machine character in man-machine interaction. In addition, the virtual scene may, but is not limited to, further include another object for advancing a plot, for example, a house, a traffic tool, weather, or natural landscape, which is configured to simulate a real environment. The foregoing description is merely an example, and this embodiment is not limited thereto.

A game application is taken an example for illustration. It is assumed that the first virtual object (for example, a virtual character S1) is controlled by a client of a current game application, the virtual scene of the game application is related to shooting, and the virtual scene includes different virtual objects. A sound triggering event carrying sound-source feature information that matches a sound-source triggering a sound is detected, within a range for sound-source detection corresponding to the virtual character S1. In a case that the sound triggering event is detected, a sound-source position at which the sound-source (for example, a sound-source A) is located is determined according to the sound-source feature information. Further, a first transmission distance between the sound-source position and a first position, at which the virtual character S1 is located, is obtained. Accordingly, a target sound to be generated at the first position by the sound-source is accurately determined according to the first transmission distance. An objective is achieved that the determined target sound is accurately reproduced at the first position in the virtual scene.

In this embodiment, the sound triggering event is detected within the range for sound-source detection according to the foregoing method for reproduction of the target sound. In a case that the sound triggering event is detected, a sound-source is determined accurately according to the sound-source feature information in the detected sound triggering event, and the target sound to be generated at the first position in the virtual scene is accurately obtained according to a position relationship between the sound-source and the first virtual object. A means of obtaining a reproduced sound is no longer limited to reproduction solely from recording. Therefore, achieved is a technical effect that accuracy is improved in sound reproduction in a virtual scene. Moreover, sounds of different sound-sources are reproduced at the first position according to different position information. Thereby, flexibility of sound reproduction is improved, and an accurate result of sound reproduction is further ensured.

An example is illustrated with reference to Figure 3. The big circle shown in Figure 3 represents a range for sound-source detection corresponding to a first virtual object (a virtual character S1). It is assumed that two sound-sources A and B are located within the range for sound-source detection of the virtual character S1, and a sound-source C is located outside the range for sound-source detection of the virtual character. Hence, the sound-source A and the sound-source B are detectable, and the sound-source C is not detectable, when the first virtual object controlled by a game application client detects the sound triggering event. Further, sound-source positions of the sound-source A and the sound-source B are obtained, and then a transmission distance a from the sound-source A to the virtual character S1 and a transmission distance b from the sound-source B to the virtual character S1 are obtained according to the sound-source positions. Target sounds, which are from the sound-source A and the sound-source B and reproducible at a position at which the virtual character S1 is located (a position at the center of the circle shown in Figure 3), may be further determined according to the transmission distance a and the transmission distance b. The target sounds are generated.

Optionally, that the target sound to be generated at the first position by the sound-source is detected according to the first transmission distance includes following steps. A virtual environment in the virtual scene is determined, where the first virtual object is currently located in the virtual environment. A sound curve of the sound-source is obtained, where the sound curve matches the virtual environment, and the sound curve indicates a correspondence between the sound triggered by the sound-source and a transmission distance. The target sound matching the first transmission distance is determined based on the sound curve.

The sound curve may include, but is not limited to: (1) a correspondence between a volume of the sound triggered by the sound-source and the transmission distance; and (2) a correspondence between a pitch of the sound triggered by the sound-source and the transmission distance. The foregoing description is merely an example. Temporal information may further be fused into the sound curve, which represents a relationship among the sound triggered by the sound-source, the transmission distance, and time. This embodiment is not limited thereto.

Optionally, that the target sound to be generated at the first position by the sound-source is determined according to the first transmission distance may include following steps. A sound-source type of the sound-source is determined. A sound curve matching the sound-source type is obtained for the sound-source. The target sound matching the first transmission distance is determined based on the sound curve.

Optionally, the sound-source type in this embodiment may be configured, but not limited, to determine the sound curve that is applied. In other words, different sound curves are set in correspondence to different sound-source types.

Specific illustration is made with reference to Figure 4. Figure 4 shows two types of sound curves. A first type of the sound curve is for a high pitched sound, which attenuates slowly and transmits for a long distance. A second type of the sound curve is for a low pitched sound, which attenuates fast and transmits for a short distance. After a type of the sound-source is obtained, different sound curves are matched according to different sound-source types, and a target sound matching the first transmission distance is determined according to a corresponding sound curve. The sound curves for the high-pitched sound and the low-pitched sound as shown in Figure 4 are merely examples, and the present disclosure is not limited thereto.

Optionally, that the sound-source position at which the sound-source is located is determined according to the sound-source feature information and the first transmission distance between the sound-source position and the first position at which the first virtual object is located is obtained includes following steps. A sound-source coordinate indicating the sound-source position is extracted from the sound-source feature information. The first transmission distance is calculated based on the sound-source coordinate and a position coordinate corresponding to the first position.

Optionally, that the sound-source position at which the sound-source is located is obtained according to the sound-source feature information in this embodiment includes a following step. A sound-source coordinate of the sound-source is extracted from the sound-source feature information. That is, a carried sound-source coordinate may be directly extracted from the sound-source feature information that matches each sound-source, after the sound triggering event is detected. For example, corresponding sound-source coordinates such as $(x_A, y_A)$ may be extracted, after a sound-source A is detected.

Optionally, that a first transmission distance between the sound-source position and a first position at which the first virtual object is located is obtained in this embodiment may be, but is not limited to, a following step. A distance between the sound-source coordinate and a coordinate of the first position is obtained. For example, it is assumed that coordinates of the first position are $(x_1, y_1)$, and a distance between the two pairs of coordinates can be obtained. Not only a distance from the first position at which the first virtual object is located to a position of the sound-source can be obtained, but also a direction of the sound-source with respect to the first virtual object can be obtained. Therefore, a position change of the sound-source with respect to the first virtual object can be accurately determined. An objective is achieved that the target sound to be generated at the first position by the sound-source is accurately determined based on the sound curve, according to the position change.

Specific illustration is made with reference to Figure 5. The big circle shown in Figure 5 is a range for sound-source detection of a first virtual object (for example, a virtual character S1). It is assumed that sound-sources indicated by a sound triggering event detected by the virtual character S1 within the range for sound-source detection include a sound-source A and a sound-source B. The sound-source A is taken as an example. Sound-source coordinates $(x_A, y_A)$ corresponding to the sound-source A may be extracted, coordinates $(x_1, y_1)$ of a first position at which the virtual character S1 is located is may be obtained, and a transmission distance (that is, the first transmission distance)

$$s = \sqrt{(y_1 - y_A)^2 + (x_1 - x_A)^2}$$ between the sound-source A and the first position may be calculated according to the coordinates. Content as shown in Figure 5 herein is merely an example for description, and the present disclosure is not limited thereto.

Optionally, that the target sound is generated at the first position in the virtual scene includes following steps. In response to a quantity of detected sound-sources being one, the target sound to be generated at the first position by the sound-source is determined, and the target sound is generated at the first position. In response to a quantity of detected sound-sources being at least two, object target sounds to be generated at the first position by at least two sound-sources, respectively, are determined, and the object target sounds are synthesized to obtain the target sound, and the target sound is generated at the first position.

Optionally, in response to a quantity of sound-sources detected being at least two, the target sound may be obtained according to at least one of the following strategies.

(1) The object target sounds to be generated at the first position by the sound-sources are synthesized based on preset proportions, to obtain the target sound.

(2) The target sound is obtained from the object target sounds to be generated at the first position by the sound-sources, based on preset priorities.

(3) The target sound is randomly obtained from the object target sounds to be generated at the first position by the sound-sources.

For example, an obtaining strategy is set to be removing an explosion sound. In a case that an explosion sound is detected, the explosion sound may be removed, and the object target sounds to be generated at the first position by the other sound-sources are synthesized to obtain the target sound. For another example, a waterfall sound is set with a highest priority. In a case that a waterfall sound is detected, only the waterfall sound is generated at the first position, and the object target sounds to be generated at the first position by the other sound-sources are neglected and not generated.

Optionally, that the sound triggering event is detected may include, but is not limited to, at least one of the following steps. It is detected whether the first virtual object performs a sound triggering action, where the sound triggering action is configured to generate the sound triggering event. It is detected whether a second virtual object interacting with the first virtual object triggers the sound triggering event, where the second virtual object is controlled by the first virtual object. It is detected whether a third virtual object triggers a sound triggering event, where a fourth virtual object configured to control the third virtual object is associated with the first virtual object in the virtual scene. It is detected whether there is an object triggering an environmental sound in the virtual environment in which the first virtual object is currently located, where the object triggering the environmental sound is configured to trigger the sound triggering event according to a predetermined period.

The first virtual object and the fourth virtual object may be, but are not limited to, objects corresponding to virtual characters that are controlled in the virtual scene via application clients. An association relationship between the first virtual object and the fourth virtual object may include, but is not limited to: comrades, enemies, or other association relationships in a same virtual scene.

In addition, the second virtual object may be, but is not limited to, an object controlled by the first virtual object, for example, equipment (such as a door, a vehicle, or a gun) in the virtual scene. The third virtual object may be, but is not limited to, an object controlled by the fourth virtual object, for example, equipment (such as a door, a vehicle, or a gun) in the virtual scene. The first to fourth virtual objects merely represents different virtual objects, and there is no limitation on numbers or a sequence of the virtual objects.

Optionally, there is a followings step before the sound triggering event is detected. A sound effect is set for a virtual object in the virtual environment, where the sound effect is associated with an attribute of the virtual object, and the sound triggering event is generated after the virtual object performs a triggering operation.

In this embodiment, the attribute may include but is not limited to a material of the virtual object. Virtual objects of different materials may, but are not limited to, be configured with different sound effects. For example, different sound effects are configured for a rock and a metal in the virtual scene, to simulate sounds of real natural objects.

In embodiments of the present disclosure, a sound triggering event is detected within a range for sound-source detection of a first virtual object. Accordingly, a sound-source position is determined based on sound-source feature information in the sound triggering event, and a first transmission distance between the sound-source position and a first position at which the first virtual object is located is obtained. A to-be-reproduced target sound is generated according to the first transmission distance. The sound triggering event is detected within the range for sound-source detection according to the foregoing method for reproduction of the target sound. In a case that the sound triggering event is detected, a sound-source is accurately determined according to the sound-source feature information in the detected sound triggering event, and the target sound to be generated at the first position in the virtual scene is accurately obtained according to a position relationship between the sound-source and the first virtual object. A means of obtaining a reproduced sound is no longer limited to reproduction solely from recording. Therefore, achieved is a technical effect that accuracy is improved in sound reproduction in a virtual scene, and addressed is an issue that accuracy is low in sound reproduction in related technology.

In an optional solution, the determining unit 906 includes a first determining module, an obtaining module, and a second determining module.

(1) The first determining module is configured to determine in the virtual scene, where the first virtual object is currently located in the virtual environment.

(2) The obtaining module is configured to obtain a sound curve of the sound-source, where the sound curve matches the virtual environment, and the sound curve indicates a correspondence between the sound triggered by the sound-source and a transmission distance.

(3) The second determining module is configured to determine the target sound matching the first transmission distance, based on the sound curve.

Optionally, a correspondence between the virtual environment and the sound curve of the sound-source may be preset, and the sound curve matching the virtual environment is obtained according to different virtual environments.

For example, the virtual environments may be a square, underwater, a dessert, and grassland. Illustration is made with reference to Figure 6 which shows four types of sound curves, and each type of the sound curves corresponds to one or more environments. At the upper-left corner is a sound curve of a square. At the upper-right corner is a sound curve of underwater. At lower-left corner is a sound curve of a dessert. At a lower-right corner is a sound curve of grassland. Different sound curves are obtained according to different environments, and target sounds are obtained according to the different sound curves.

The virtual environment being the square, the underwater, the dessert, or the grassland is merely an example. The virtual environments may be other environments. The four sound curves in Figure 6 are merely for illustration, and a specific contour of the sound curve is required to be set according to practice.

In this embodiment, different sound curves are set for different environments, such that a sound-source provides different target sounds in different environments. Achieved is an effect that the target sound is adjusted with a change in the environment, improving accuracy of sound reproduction.

In an optional solution, the apparatus further includes a first configuration unit.

(1) The first configuration unit is configured to set a sound curve for the sound-source, before the sound triggering event is detected. The sound curve includes a first curve and a second curve, the first curve indicates a curve section in which the sound triggered by the sound-source does not attenuate, and the second curve indicates a curve section in which the sound triggered by the sound-source attenuates.

A game application is further taken as an example for illustration. For example, the sound-source may be a virtual object in a game. In a case that the virtual object makes a sound such as a gunshot and a roar, the sound attenuates slowly within a certain distance, which follows the first curve in Figure 7. The sound attenuates fast when exceeding such distance, which follows the second curve in Figure 7.

A rate of attenuation and a boundary for the first curve and the second curve are different for different sounds made by the sound-source.

For example, the sound-source is an automobile of which a sound transmits for a long distance, and thereby the first curve is long. The sound does not start attenuating fast to follow the second curve, until transmitting for a long distance. In a case that the sound-source is a bicycle of which a sound transmits a short distance, the first curve is shorter. The sound starts to attenuate fast to follow the second curve, after transmitting for a short distance.

The foregoing example and the content in Figure 7 are merely for explaining the present disclosure, and the present disclosure is not limited thereto.

In this embodiment, a first curve and a second curve are configured in the sound curve for the sound-source. Hence, the sound attenuates faster after transmitting for a certain distance, and accuracy of sound reproduction is improved.

In an optional solution, the second determining module includes a first obtaining submodule and a determining submodule.

(1) The first obtaining submodule is configured to obtain, based on the sound curve, an attenuation distance of the sound-source, where the sound triggered by the sound-source is not reproduced after transmitting for the attenuation distance.

(2) The determining submodule is configured to determine the target sound matching the first transmission distance, in response to the first transmission distance being less than the attenuation distance.

A game application is further taken as an example for illustration. The first virtual object may be a virtual character controlled by a user, and the sound-source may be a traffic tool in a game. A target sound is obtained based on a sound curve corresponding to a sound made by the traffic tool, in a case that the sound made by the traffic tool in the game is located within a range for sound-source detection of the virtual character. In a case that the traffic tool is too far away from the virtual character, the target sound is zero in value, as shown in Figure 7. Even if the sound made by the traffic tool is detected, the sound is not heard by the virtual character in such case since the distance is too long. In a case that the target sound corresponding to the transmission distance between the traffic tool and the virtual character is not zero, the virtual character can hear the sound made by the traffic tool.

In this embodiment, it is determined based on the attenuation distance whether to reproduce a target sound. Thereby, the target sound is not reproduced in a case that a first transmission distance is too long, which improves accuracy of sound reproduction.

In an optional solution, the obtaining unit 904 includes an extraction module and a calculation module.

(1) The extraction module is configured to extract a sound-source coordinate indicating the sound-source position, from the sound-source feature information.

(2) The calculation module is configured to calculate the first transmission distance based on the sound-source coordinate and a position coordinate corresponding to the first position.

Optionally, a game application is further taken an example for illustration. The first virtual object may be a virtual character in the game, and the sound-source may be a traffic tool. As shown in Figure 8, a two-dimensional coordinate system is established in a plane in which the virtual character is located, and coordinates of a position at which a traffic tool A is located in the two-dimensional coordinate system are (4, 3). A distance from the traffic tool to the virtual character is calculated based on the coordinates at which the traffic tool is located, and a result of the calculation is 5.

In this embodiment, the coordinate of the sound-source is obtained through establishing a coordinate system, and the first transmission distance from the sound-source to the first virtual object is calculated. Thereby, the target sound may be accurately adjusted based on the first transmission distance, improving accuracy of sound reproduction.

In an optional solution, the reproduction unit 908 includes a first reproduction module and a second reproduction module.

(1) The first reproduction module is configured to determine the target sound to be generated at the first position by the sound-source, and generate the target sound at the first position, in response to a quantity of detected sound-sources being one.

(2) The second reproduction module is configured to determine object target sounds to be generated at the first position by at least two sound-sources, respectively, synthesize the object target sounds to obtain the target sound, and generate the target sound at the first position, in response to a quantity of detected sound-sources being at least two.

Optionally, the second reproduction module includes at least one of a synthesis submodule, a second obtaining submodule, or a third obtaining submodule.

(1) The synthesis submodule is configured to synthesize the object target sounds based on preset proportions, to obtain the target sound.

(2) The second obtaining submodule is configured to obtain the target sound from the object target sounds, based on preset priorities.

(3) The third obtaining submodule is configured to obtain the target sound randomly from the object target sounds.

Optionally, a proportion of synthesis may be set for each object target sound. Multiple object target sounds are synthesized as the target sound, based on the proportion of synthesis set for each object target sound, in a case that the multiple object target sounds are obtained.

A game application is further taken as an example for illustration. The sound-source may be a traffic tool, wind, a handgun, or the like in the game. The proportions of synthesis are 0.3, 0.2, and 0.5 for sounds of the traffic tool, the wind, and the handgun, respectively. In a case that object target sounds of the traffic tool, wind, and handgun are obtained, the object target sounds are multiplied by the corresponding proportions of synthesis, and then the multiplied object target sounds are synthesized as the target sound.

Optionally, priorities may be set for the sounds of the sound-source. Sounds of different sound-sources correspond to different priorities. A sound made by the sound-source of a high priority is preferentially heard in the target sound. A sound made by the sound-source of a low priority is not heard or is weakened, when there is the sound made by the sound-source of a high priority.

A game application is further taken as an example for illustration. The sound-source may be a traffic tool or a handgun. A priority of the handgun is higher than that of the traffic tool. The object target sounds of the handgun and the traffic tool are obtained. Since the priority of the handgun is higher, a sound of the handgun is louder than that of the traffic tool, or a sound of the traffic tool cannot be heard in the target sound.

In this embodiment, the target sound is obtained through different methods. Flexibility is improved in obtaining the target sound, and achieved is an effect that flexibility is improved in sound reproduction.

In an optional solution, the detection unit 902 includes at least one of a first detection module, a second detection module, a third detection module, or a fourth detection module.

(1) The first detection module is configured to detect whether the first virtual object performs a sound triggering action, where the sound triggering action is configured to generate the sound triggering event.

(2) The second detection module is configured to detect whether a second virtual object interacting with the first virtual object triggers the sound triggering event, where the second virtual object is controlled by the first virtual object.

(3) The third detection module is configured to detect whether a third virtual object triggers the sound triggering event, where a fourth virtual object configured to the third virtual object is associated with the first virtual object in the virtual scene.

(4) The fourth detection module is configured to detect whether there is an object triggering an environmental sound in the virtual environment in which the first virtual object is currently located, where the object triggering the environmental sound is configured to trigger the sound triggering event according to a predetermined period.

A game application is further taken as an example for illustration. The first virtual object may be a virtual character controlled by a first user. The second virtual object may be a weapon of a virtual character controlled by the first user. The fourth virtual object may be a virtual character controlled by another user. The third virtual object may be a weapon of a virtual character controlled by another user. The object triggering the environmental sound may be wind, rain, or the like.

For example, a virtual character controlled by the first user triggers the sound triggering event in a game, in a case that the first virtual character moves and makes a sound under control of the first user. A weapon triggers the sound triggering event, in a case that the virtual character uses the weapon under control of the first user. A virtual character controlled by another user triggers the sound triggering event, in a case that the virtual character moves and makes a sound under control of the another user. A weapon triggers the sound triggering event, in a case that the virtual character uses the weapon under control of the another user. A wind triggers the sound triggering event, in a case that there is the wind in the environment.

In this embodiment, it is detected whether the sound triggering event is triggered by a first virtual object, a second virtual object, a third virtual object, or a virtual environment in which the virtual object is located. Thereby, achieved is an objective that the sound triggering event is accurately detected, so as to obtain the target sound according to the sound triggering event. Accuracy is improved in sound reproduction.

In an optional solution, the apparatus further includes a second configuration unit.

(1) The second configuration unit is configured to set a sound effect for a virtual object in the virtual scene, before the sound triggering event is detected, where the sound effect is associated with an attribute of the virtual object, and the sound triggering event is generated after the virtual object performs a triggering operation.

A game application is further taken an example for illustration. The virtual object may be a virtual character, a virtual item, or the like in a game. For example, the virtual object may be a weapon, a traffic tool, or the like. A sound effect is correspondingly generated when the virtual character moves, uses the weapon, or uses the traffic tool. Different sound effects are set according to different types of the virtual character or the virtual item. For example, different sound effects are set for the traffic tool being an automobile and the traffic tool being a bicycle.

In this embodiment, the sound effect is set for the virtual object. Thereby, the set sound effects can be checked and synthesized to obtain the target sound, and flexibility is improved in sound reproduction.

A storage medium is further provided according to another aspect of embodiments of the present disclosure. The storage medium stores a computer program, and the computer program when being executed is configured to perform steps in any of the foregoing method embodiments.

Optionally, the storage medium in this embodiment may be configured to store a computer program for performing following steps S1 to S4.

In step S1, a sound triggering event is detected within a range for sound-source detection, where the range for sound-source detection is in a virtual scene and corresponds to a first virtual object, and sound-source feature information that matches a sound-source triggering a sound is carried in the sound triggering event.

In step S2, a sound-source position at which the sound-source is located is determined according to the sound-source feature information, after detecting the sound triggering event, and a first transmission distance between the sound-source position and a first position at which the first virtual object is located is obtained.

In step S3, a target sound to be generated at the first position by the sound-source is determined according to the first transmission distance.

In step S4, the target sound is generated at the first position in the virtual scene.

Optionally, the storage medium in this embodiment may be configured to store a computer program for performing following steps S1 to S3.

In step S1, a virtual environment in the virtual scene is determined, where the first virtual object is currently located in the virtual environment.

In step S2, a sound curve of the sound-source is obtained, where the sound curve matches the virtual environment, and the sound curve indicates a correspondence between the sound triggered by the sound-source and a transmission distance.

In step S3, the target sound matching the first transmission distance is determined based on the sound curve.

Optionally, the storage medium in this embodiment may be configured to store a computer program for performing a following step S1.

In step S1, a sound curve for the sound-source is set, where the sound curve includes a first curve and a second curve, the first curve indicates a curve section in which the sound triggered by the sound-source does not attenuate, and the second curve indicates a curve section in which the sound triggered by the sound-source attenuates.

Optionally, the storage medium in this embodiment may be configured to store a computer program for performing following steps S1 and S2.

In step S1, an attenuation distance of the sound-source is obtained based on the sound curve, where the sound triggered by the sound-source is not reproduced after transmitting for the attenuation distance.

In step S2, the target sound matching the first transmission distance is determined, in response to the first transmission distance being less than the attenuation distance.

Optionally, the storage medium in this embodiment may be configured to store a computer program for performing following steps S1 and S2.

In step S1, a sound-source coordinate indicating the sound-source position is extracted from the sound-source feature information.

In step S2, the first transmission distance is calculated based on the sound-source coordinate and a position coordinate corresponding to the first position.

Optionally, the storage medium in this embodiment may be configured to store a computer program for performing following steps S1 and S2.

In step S1, the target sound to be generated at the first position by the sound-source is determined, and the target sound is generated at the first position, in response to a quantity of detected sound-sources being one.

In step S2, object target sounds to be generated at the first position by at least two sound-sources, respectively, are determined, the object target sounds are synthesized to obtain the target sound, and the target sound is generated at the first position, in response to a quantity of detected sound-sources being at least two.

Optionally, the storage medium in this embodiment may be configured to store a computer program for performing a following step S1, S2, or S3.

In step S1, the object target sounds are synthesized based on preset proportions, to obtain the target sound.

In step S2, the target sound is obtained from the object target sounds, based on preset priorities.

In step S3, the target sound is randomly obtained from the object target sounds.

Optionally, the storage medium in this embodiment may be configured to store a computer program for performing a following step S1, S2, S3, or S4.

In step S1, it is detected whether the first virtual object performs a sound triggering action, where the sound triggering action is configured to generate the sound triggering event.

In step S2, it is detected whether a second virtual object interacting with the first virtual object triggers the sound triggering event, where the second virtual object is controlled by the first virtual object.

In step S3, it is detected whether a third virtual object triggers the sound triggering event, where a fourth virtual object configured to the third virtual object is associated with the first virtual object in the virtual scene.

In step S4, it is detected whether there is an object triggering an environmental sound in the virtual environment in which the first virtual object is currently located, where the object triggering the environmental sound is configured to trigger the sound triggering event according to a predetermined period.

Optionally, the storage medium in this embodiment may be configured to store a computer program for performing a following step S1.

In step S1, a sound effect is set for a virtual object in the virtual scene, where the sound effect is associated with an attribute of the virtual object, and the sound triggering event is generated after the virtual object performs a triggering operation.

Optionally, the storage medium in this embodiment further stores a computer program for performing steps included in the method according to the aforementioned embodiments, which are not repeated herein.

Optionally, those skilled in the art may understand that all or some of the steps of the methods in the aforementioned embodiments may be implemented via a program instructing relevant hardware of a terminal device. The program may be stored in a computer-readable storage medium, and the storage medium may include a flash drive, a read-only memory (ROM), a random access memory (RAM), a magnetic disk, an optical disc, or the like.

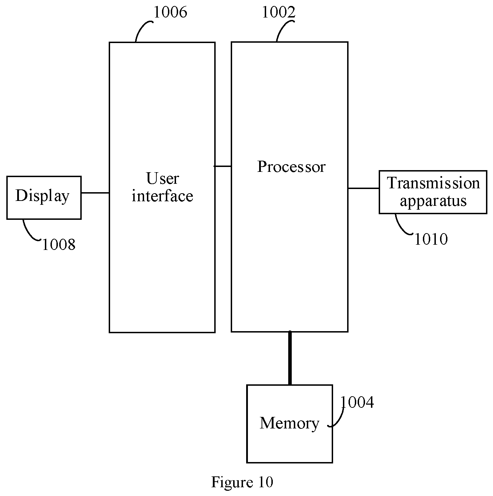

An electronic device is provided according to another aspect of embodiments of the present disclosure. The electronic device is configured to perform the aforementioned method for sound reproduction. As shown in Figure 10, the electronic device includes a memory 1004 and a processor 1002. The memory 1004 stores a computer program, and the processor 1002 is configured to execute the computer program to perform steps in any of the foregoing method embodiments.

Optionally, the electronic device in this embodiment may be located in at least one of multiple network devices in a computer network.

Optionally, the processor in this embodiment may be configured to execute the computer program to perform following steps S1 to S4.

In step S1, a sound triggering event is detected within a range for sound-source detection, where the range for sound-source detection is in a virtual scene and corresponds to a first virtual object, and sound-source feature information that matches a sound-source triggering a sound is carried in the sound triggering event.

In step S2, a sound-source position at which the sound-source is located is determined according to the sound-source feature information, after detecting the sound triggering event, and a first transmission distance between the sound-source position and a first position at which the first virtual object is located is obtained.

In step S3, a target sound to be generated at the first position by the sound-source is determined according to the first transmission distance.

In step S4, the target sound is generated at the first position in the virtual scene.

Optionally, those skilled in the art may understand that the structure shown in Figure 10 is only illustrative. The electronic device may be a terminal device such as a smartphone (for example, an Android mobile phone or an iOS mobile phone), a tablet computer, a palmtop computer, a mobile Internet device (MID), or a PAD. A structure of the foregoing electronic device is not limited to Figure 10. For example, the electronic device may further include more or less components (such a network interface, and the like) than those shown in Figure 10, or may have configurations different from Figure 10.

The memory 1004 may be configured to store a software program and a module, such as program instructions or a program module corresponding to the method for information interaction in embodiments of the present disclosure. The processor 1002 executes the software program and the module stored in the memory 1004, so as to perform various functional applications and process data processing. Thereby, the aforementioned method for information interaction is implemented. The memory 1004 may include a high speed random access memory, and may further include a non-volatile memory, for example, one or more of a magnetic storage apparatuses, a flash memory, or other non-volatile solid-state memories. In some embodiments, the memory 1004 may further include memories arranged remotely with respect to the processor 1002, and these remote memories may be connected to the terminal through a network. Examples of the network include, but are not limited to, the Internet, an intranet, a local area network, a mobile communications network, or a combination thereof.

Optionally, the electronic device in this embodiment further includes a transmission apparatus 1010. The transmission apparatus 1010 is configured to receive or transmit data through a network. Specific examples of the network may include a wired network or a wireless network. In an embodiment, the transmission apparatus 1010 includes a network interface controller (NIC), which may be connected to another network device and a router via a cable, so as to communicate with the Internet or a local area network. In an embodiment, the transmission apparatus 1010 is a radio frequency (RF) module that is configured to communicate wirelessly with the Internet.

Optionally, the electronic device in this embodiment further includes a user interface 1006 and a display 1008. The display 1008 is configured to display the virtual scene and corresponding virtual objects. The user interface 1006 is configured to obtain an operation instruction corresponding to an operation. The operation may include, but is not limited to: a touch operation, a click operation, a voice input operation, or the like.

Sequence numbers of the foregoing embodiments of the present disclosure are merely to facilitate description, and do not imply preference among the embodiments.

An integrated unit in the foregoing embodiments may be stored in the foregoing computer-readable storage medium, in case of being implemented in a form of a software functional unit and sold or used as an independent product. Based on such understanding, the essence or the part contributing to the related art in technical solutions of the present disclosure may be implemented in a form of a software product. The computer software product is stored in a storage medium, and includes several instructions to enable one or more computers (which may be a personal computer, a server, or a network device) to perform all or part of steps in each method described in embodiments of the present disclosure.

In the foregoing embodiments of the present disclosure, emphases are laid in description of each embodiment. A part not described in detail in one embodiment may refer to related descriptions in another embodiment.

In the several embodiments provided in the present disclosure, it is understood that the disclosed client may be implemented in other manners. The aforementioned apparatus embodiments are merely illustrative. For example, division of the units is merely logical, and there may be other manners of division in practical implementations. For example, multiple units or components may be combined or integrated into another system, or some features may be ignored or not performed. In addition, mutual coupling, direct coupling, or communication connection that is displayed or discussed may be implemented via some interfaces. The indirect coupling or the communication connection between the units or the modules may be implemented electrically or in other forms.

The units described as separate parts may or may not be physically separate, and parts displayed as units may or may not be physical units. That is, they may be located in one position, or may be distributed on multiple network units. Some or all of the units may be selected according to a practical requirement, to achieve objectives of the solutions of the embodiments.

In addition, functional units in embodiments of the present disclosure may be integrated into one processing unit, or each of the units may exist alone physically, or two or more units are integrated into one unit. The integrated unit may be implemented in a form of hardware, or may be implemented in a form of a software functional unit.

Hereinabove described are merely optional implementations of the present disclosure. Various improvements and refinements may be made by those skilled in the art without departing from the principle of the present disclosure, and such improvements and refinements all fall within the protection scope of the present disclosure.

**Industrial Applicability**

In embodiments of the present disclosure, a sound triggering event is detected within a range for sound-source detection of a first virtual object. Accordingly, a sound-source position is determined based on sound-source feature information in the sound triggering event, and a first transmission distance between the sound-source position and a first position at which the first virtual object is located is obtained. A to-be-reproduced target sound is determined according to the first transmission distance. The sound triggering event is detected within the range for sound-source detection according to the foregoing method for reproduction of the target sound. In a case that the sound triggering event is detected, a sound-source is accurately determined according to the sound-source feature information in the detected sound triggering event, and the target sound to be generated at the first position in the virtual scene is accurately obtained according to a position relationship between the sound-source and the first virtual object. A means of obtaining a reproduced sound is no longer limited to reproduction solely from recording. Therefore, achieved is a technical effect that accuracy is improved in sound reproduction in a virtual scene.

**Claims**

1. A method for sound reproduction, comprising:

   detecting, by a terminal, a sound triggering event within a range for sound-source detection, wherein the range for sound-source detection is in a virtual scene and corresponds to a first virtual object, and sound-source feature information that matches a sound-source triggering a sound is carried in the sound triggering event;
   determining, by the terminal according to the sound-source feature information, a sound-source position at which the sound-source is located, after detecting the sound triggering event;
   obtaining, by the terminal, a first transmission distance between the sound-source position and a first position at which the first virtual object is located;
   determining, by the terminal according to the first transmission distance, a target sound to be generated at the first position by the sound-source; and
   generating, by the terminal, the target sound at the first position in the virtual scene;
   wherein the method is **characterized in that**:
   determining, by the terminal according to the first transmission distance, the target sound to be generated at the first position by the sound-source comprises:
   determining, by the terminal, a virtual environment out of different virtual environments in the virtual scene, wherein the first virtual object is currently located in the virtual environment;
   obtaining, by the terminal according to the virtual environment, a sound curve of the sound-source, wherein the sound curve matches the virtual environment, the sound curves for different virtual environments are different, and the sound curve indicates a correspondence between a volume or a pitch of the sound triggered by the sound-source and a transmission distance; and
   determining, by the terminal based on the sound curve, the target sound matching the first transmission distance,

wherein before detecting, by a terminal, the sound triggering event, the method further comprises:

setting, by the terminal, the sound curve for the sound-source, wherein the sound curve comprises a first curve and a second curve;
wherein the first curve indicates a first curve section up to a first distance in which the sound triggered by the sound source attenuates with distance, and the second curve indicates a second curve section exceeding said first distance in which the sound attenuates more with distance than the sound attenuates in the first curve section,
wherein generating, by the terminal, the target sound at the first position in the virtual scene comprises:

in response to a quantity of detected sound-sources being one,

determining, by the terminal, the target sound to be generated at the first position by the sound-source, and
generating, by the terminal, the target sound at the first position; and

in response to a quantity of detected sound-sources being at least two,

determining, by the terminal, object target sounds to be generated at the first position by at least two sound-sources, respectively;
synthesizing, by the terminal, the object target sounds to obtain the target sound, and;
generating, by the terminal, the target sound at the first position,

wherein synthesizing, by the terminal, the object target sounds to obtain the target sound comprises at least one of:

synthesizing, by the terminal, the object target sounds based on preset proportions, to obtain the target sound;
obtaining, by the terminal, the target sound from the object target sounds, based on preset priorities; and
obtaining, by the terminal, the target sound randomly from the object target sounds.

2. The method according to claim 1, wherein determining, by the terminal based on the sound curve, the target sound matching the first transmission distance comprises:

obtaining, by the terminal based on the sound curve, an attenuation distance of the sound-source, wherein the sound triggered by the sound-source is not reproduced after transmitting for the attenuation distance; and
determining, by the terminal, the target sound matching the first transmission distance, in response to the first transmission distance being less than the attenuation distance.

3. The method according to claim 1, wherein determining, by the terminal according to the sound-source feature information, the sound-source position at which the sound-source is located, after detecting the sound triggering event, and obtaining, by the terminal, a first transmission distance between the sound-source position and a first position at which the first virtual object is located comprises:

extracting, by the terminal, a sound-source coordinate indicating the sound-source position, from the sound-source feature information; and
calculating, by the terminal, the first transmission distance based on the sound-source coordinate and a position coordinate corresponding to the first position.

4. The method according to claim 1, wherein detecting, by the terminal, the sound triggering event comprising at least one of the following:

detecting, by the terminal, whether the first virtual object performs a sound triggering action, wherein the sound triggering action is configured to generate the sound triggering event;
detecting, by the terminal, whether a second virtual object interacting with the first virtual object triggers the sound triggering event, wherein the second virtual object is controlled by the first virtual object;
detecting, by the terminal, whether a third virtual object triggers the sound triggering event, wherein a fourth virtual object configured to the third virtual object is associated with the first virtual object in the virtual scene; and detecting, by the terminal, whether there is an object, which is configured to trigger the sound triggering event according to a predetermined period, in the virtual environment in which the first virtual object is currently located.

5. The method according to claim 1, wherein before detecting, by the terminal, the sound triggering event, the method further comprises:
setting, by the terminal, a sound effect for a virtual object in the virtual scene, wherein the sound effect is associated with an attribute of the virtual object, and the sound triggering event is generated after the virtual object performs a triggering operation.

6. A storage medium, storing a computer program, wherein the computer program when being executed is configured to perform the method according to any one of claims 1 to 5.

7. An electronic device, comprising:

a memory, and
a processor,
wherein the memory stores a computer program, and the processor is configured to execute the computer program to perform the method according to any one of claims 1 to 5.

**Patentansprüche**

1. Verfahren zur Tonwiedergabe, umfassend:

Detektieren, durch ein Endgerät, eines tonauslösenden Ereignisses innerhalb eines Bereichs zur Tonquellendetektion, wobei der Bereich zur Tonquellendetektion in einer virtuellen Szene liegt und einem ersten virtuellen Objekt entspricht, und Informationen über Tonquellenmerkmale, die mit einer Tonquelle, die einen Ton auslöst, übereinstimmen, in dem tonauslösenden Ereignis transportiert werden;
Bestimmen, durch das Endgerät gemäß den Informationen über Tonquellenmerkmale, einer Tonquellenposition, in der sich die Tonquelle befindet, nach dem Detektieren des tonauslösenden Ereignisses;
Erzielen, durch das Endgerät, einer ersten Übertragungsentfernung zwischen einer Tonquellenposition und einer ersten Position, in der sich das erste virtuelle Objekt befindet;
Bestimmen, durch das Endgerät gemäß der ersten Übertragungsentfernung, eines Zieltons, der in der ersten Position durch die Tonquelle zu generieren ist; und
Generieren, durch das Endgerät, des Zieltons in der ersten Position in der virtuellen Szene;
wobei das Verfahren **dadurch gekennzeichnet ist, dass**:
das Bestimmen, durch das Endgerät, gemäß der ersten Übertragungsentfernung, eines Zieltons, der in der ersten Position durch die Tonquelle zu generieren ist, umfasst:

Bestimmen, durch das Endgerät, einer virtuellen Umgebung aus verschiedenen virtuellen Umgebungen in der virtuellen Szene, wobei sich das erste virtuelle Objekt gerade in der virtuellen Umgebung befindet;
Erzielen, durch das Endgerät gemäß der virtuellen Umgebung, einer Tonkurve der Tonquelle, wobei die Tonkurve mit der virtuellen Umgebung übereinstimmt, die Tonkurven für verschiedene virtuelle Umgebungen unterschiedlich sind, und die Tonkurve eine Entsprechung zwischen einer Lautstärke oder einer Tonhöhe des Tons, der durch die Tonquelle ausgelöst wird, und einer Übertragungsentfernung angibt; und
Bestimmen, durch das Endgerät basierend auf der Tonkurve, des Zieltons, der mit der ersten Übertragungsentfernung übereinstimmt,
wobei vor dem Detektieren, durch ein Endgerät, des einen tonauslösenden Ereignisses, das Verfahren ferner umfasst:

Einstellen, durch das Endgerät, der Tonkurve für die Tonquelle, wobei die Tonkurve eine erste Kurve und eine zweite Kurve umfasst;
wobei die erste Kurve einen ersten Kurvenabschnitt bis zu einer ersten Entfernung angibt, in welcher der Ton, der durch die Tonquelle ausgelöst wird, mit der Entfernung gedämpft wird, und die zweite Kurve einen zweiten Kurvenabschnitt angibt, der die erste Entfernung überschreitet, in welcher der Ton mit der Entfernung mehr gedämpft wird als der Ton in dem ersten Kurvenabschnitt gedämpft wird,
wobei das Generieren, durch das Endgerät, des Zieltons in der ersten Position in der virtuellen Szene umfasst:

als Reaktion darauf, dass eine Menge von detektierten Tonquellen gleich eins ist,
Bestimmen, durch das Endgerät, des Zieltons, der in der ersten Position durch die Tonquelle zu generieren ist, und
Generieren, durch das Endgerät, des Zieltons in der ersten Position; und
als Reaktion darauf, dass eine Menge von detektierten Tonquellen mindestens gleich zwei ist,
Bestimmen, durch das Endgerät, eines Objektzieltons, der in der ersten Position durch mindestens zwei Tonquellen zu generieren ist;
Synthetisieren, durch das Endgerät, des Objektzieltons, um den Zielton zu erzielen, und;
Generieren, durch das Endgerät, des Zieltons in der ersten Position,
wobei das Synthetisieren, durch das Endgerät, des Objektzieltons zum Erzielen des Objektzieltons mindestens eines umfasst von:

Synthetisieren, durch das Endgerät, des Objektzieltons basierend auf voreingestellten Proportionen, um den Zielton zu erzielen;
Erzielen, durch das Endgerät, des Zieltons aus dem Objektzielton, basierend auf voreingestellten Prioritäten; und
zufälliges Erzielen, durch das Endgerät, des Zieltons aus dem Objektzielton.

2. Verfahren nach Anspruch 1, wobei das Bestimmen, durch das Endgerät basierend auf der Tonkurve, des Zieltons, der mit der ersten Übertragungsentfernung übereinstimmt, umfasst:

Erzielen, durch das Endgerät basierend auf der Tonkurve, einer Dämpfungsentfernung der Tonquelle, wobei der Ton, der durch die Tonquelle ausgelöst wird, nach dem Übertragen für die Dämpfungsentfernung nicht wiedergegeben wird; und
Bestimmen, durch das Endgerät, des Zieltons, der mit der ersten Übertragungsentfernung übereinstimmt, als Reaktion darauf, dass die erste Übertragungsentfernung kleiner als die Dämpfungsentfernung ist.

3. Verfahren nach Anspruch 1, wobei das Bestimmen, durch das Endgerät gemäß den Informationen über Tonquellenmerkmale, der Tonquellenposition, in der sich die Tonquelle befindet, nach dem Detektieren des eines tonauslösenden Ereignisses, und das Erzielen, durch das Endgerät, einer ersten Übertragungsentfernung zwischen der Tonquellenposition und einer ersten Position, in der sich das erste virtuelle Objekt befindet, umfasst:

Extrahieren, durch das Endgerät, einer Tonquellenkoordinate, die eine Tonquellenposition angibt, aus den Informationen über Tonquellenmerkmale; und
Berechnen, durch das Endgerät, der ersten Übertragungsentfernung basierend auf der einer Tonquellenkoordinate und einer Positionskoordinate, die der ersten Position entspricht.

4. Verfahren nach Anspruch 1, wobei das Detektieren, durch das Endgerät, des tonauslösenden Ereignisses mindestens einen der folgenden Schritte umfasst:

Detektieren, durch das Endgerät, ob das erste virtuelle Objekt eine tonauslösende Aktion ausführt, wobei die tonauslösende Aktion dazu konfiguriert ist, das eine tonauslösende Ereignis auszuführen;
Detektieren, durch das Endgerät, ob ein zweites virtuelles Objekt, das mit dem ersten virtuellen Objekt interagiert, das eine tonauslösende Ereignis auslöst, wobei das zweite virtuelle Objekt durch das erste virtuelle Objekt gesteuert wird;
Detektieren, durch das Endgerät, ob ein drittes virtuelle Objekt das eine tonauslösende Ereignis auslöst, wobei ein viertes virtuelles Objekt, das für das dritte virtuelle Objekt konfiguriert ist, dem ersten virtuellen Objekt in der virtuellen Szene zugeordnet ist; und
Detektieren, durch das Endgerät, ob es ein Objekt gibt, das dazu konfiguriert ist, das ein tonauslösendes Ereignis gemäß einer vorbestimmten Periode, in der virtuellen Umgebung, n der sich das virtuelle Objekt gerade befinde, auszulösen.

5. Verfahren nach Anspruch 1, wobei vor dem Detektieren, durch das Endgerät, des einem tonauslösenden Ereignisses, das Verfahren ferner umfasst:
Einstellen, durch das Endgerät, eines Toneffekts für ein virtuelle Objekt in der virtuellen Szene, wobei der Toneffekt einem Attribut des virtuellen Objekts zugeordnet ist, und das eine tonauslösende Ereignis generiert wird, nachdem das virtuelle Objekt einen Auslösevorgang ausführt.

**6.** Speichermedium, das ein Computerprogramm speichert, wobei das Computerprogramm, wenn es ausgeführt wird, dazu konfiguriert ist, das Verfahren nach einem der Ansprüche 1 bis 5 auszuführen.

**7.** Elektronische Vorrichtung, umfassend:

einen Speicher, und
einen Prozessor,
wobei der Speicher ein Computerprogramm speichert, und der Prozessor dazu konfiguriert ist, das Computerprogramm durchzuführen, um das Verfahren nach einem der Ansprüche 1 bis 5 auszuführen.

**Revendications**

**1.** Procédé de reproduction sonore, comprenant :

la détection, par un terminal, d'un événement de déclenchement de son dans une plage de détection de source sonore, dans lequel la plage de détection de source sonore se trouve dans une scène virtuelle et correspond à un premier objet virtuel, et des informations de caractéristiques de source sonore concordant avec une source sonore déclenchant un son sont contenues dans l'événement de déclenchement de son ;
la détermination, par le terminal selon les informations de caractéristiques de source sonore, d'une position de source sonore à laquelle la source sonore est située après avoir détecté l'événement de déclenchement de son ;
l'obtention, par le terminal, d'une première distance de transmission entre la position de source sonore et une première position à laquelle le premier objet virtuel est situé ;
la détermination, par le terminal selon la première distance de transmission, d'un son cible devant être généré à la première position par la source sonore ; et
la génération, par le terminal, du son cible à la première position dans la scène virtuelle ;
dans lequel le procédé est **caractérisé en ce que** :
la détermination, par le terminal selon la première distance de transmission, du son cible devant être généré à la première position par la source sonore comprend :

la détermination, par le terminal, d'un environnement virtuel parmi différents environnements virtuels dans la scène virtuelle, dans lequel le premier objet virtuel est actuellement situé dans l'environnement virtuel ;
l'obtention, par le terminal selon l'environnement virtuel, d'une courbe sonore de la source sonore, dans lequel la courbe sonore concorde avec l'environnement virtuel, les courbes sonores de différents environnements virtuels sont différentes, et la courbe sonore indique une correspondance entre un volume ou une hauteur du son déclenché par la source sonore et une distance de transmission ; et
la détermination, par le terminal sur la base de la courbe sonore, du son cible concordant avec la première distance de transmission,
dans lequel, avant de détecter, par un terminal, l'événement de déclenchement de son, le procédé comprend en outre :

le réglage, par le terminal, de la courbe sonore de la source sonore, dans lequel la courbe sonore comprend une première courbe et une deuxième courbe ;
dans lequel la première courbe indique une première section de courbe jusqu'à une première distance dans laquelle le son déclenché par la source sonore s'atténue avec la distance, et la deuxième courbe indique une deuxième section de courbe dépassant ladite première distance dans laquelle le son s'atténue davantage avec la distance que le son ne s'atténue dans la première section de courbe,
dans lequel la génération, par le terminal, du son cible à la première position dans la scène virtuelle comprend :

lorsqu'une quantité de sources sonores détectées est de un,
la détermination, par le terminal, du son cible devant être généré à la première position par la source sonore, et
la génération, par le terminal, du son cible à la première position ; et
lorsqu'une quantité de sources sonores détectées est d'au moins deux,
la détermination, par le terminal, de sons cibles d'objet devant être générés à la première position par au moins deux source sonores, respectivement ;

la synthèse, par le terminal, des sons cibles d'objet afin d'obtenir le son cible, et ;

la génération, par le terminal, du son cible à la première position,

dans lequel la synthèse, par le terminal, des sons cibles d'objet afin d'obtenir le son cible comprend au moins une des opérations suivantes :

synthétiser, par le terminal, les sons cibles d'objet sur la base de proportions prédéfinies, afin d'obtenir le son cible ;

obtenir, par le terminal, le son cible à partir des sons cibles d'objet, sur la base de priorités prédéfinies ; et

obtenir, par le terminal, le son cible de manière aléatoire à partir des sons cibles d'objet.

2. Procédé selon la revendication 1, dans lequel la détermination, par le terminal sur la base de la courbe sonore, du son cible concordant avec la première distance de transmission comprend :

l'obtention, par le terminal sur la base de la courbe sonore, d'une distance d'atténuation de la source sonore, dans lequel le son déclenché par la source sonore n'est pas reproduit après la transmission pour la distance d'atténuation ; et

la détermination, par le terminal, du son cible concordant avec la première distance de transmission, lorsque la première distance de transmission est inférieure à la distance d'atténuation.

3. Procédé selon la revendication 1, dans lequel la détermination, par le terminal selon les informations de caractéristiques de source sonore, de la position de source sonore à laquelle la source sonore est située après avoir détecté l'événement de déclenchement de son, et l'obtention, par le terminal, d'une première distance de transmission entre la position de source sonore et une première position à laquelle le premier objet virtuel est situé comprennent :

l'extraction, par le terminal, d'une coordonnée de source sonore indiquant la position de source sonore, à partir des informations de caractéristiques de source sonore ; et

le calcul, par le terminal, de la première distance de transmission sur la base de la coordonnée de source sonore et d'une coordonnée de position correspondant à la première position.

4. Procédé selon la revendication 1, dans lequel la détection, par le terminal, de l'événement de déclenchement de son comprend au moins une des opérations suivantes :

détecter, par le terminal, si le premier objet virtuel réalise une action de déclenchement de son, dans lequel l'action de déclenchement de son est configurée pour générer l'événement de déclenchement de son ;

détecter, par le terminal, si un deuxième objet virtuel interagissant avec le premier objet virtuel déclenche l'événement de déclenchement de son, dans lequel le deuxième objet virtuel est contrôlé par le premier objet virtuel ;

détecter, par le terminal, si un troisième objet virtuel déclenche l'événement de déclenchement de son, dans lequel un quatrième objet virtuel configuré pour le troisième objet virtuel est associé au premier objet virtuel dans la scène virtuelle ; et

détecter, par le terminal, s'il existe un objet qui est configuré pour déclencher l'événement de déclenchement de son selon une période prédéterminée dans l'environnement virtuel dans laquelle le premier objet virtuel est actuellement situé.

5. Procédé selon la revendication 1, dans lequel avant de détecter, par le terminal, l'événement de déclenchement de son, le procédé comprend en outre :

le réglage, par le terminal, d'un effet sonore pour un objet virtuel dans la scène virtuelle, dans lequel l'effet sonore est associé à un attribut de l'objet virtuel, et l'événement de déclenchement de son est généré après que l'objet virtuel a réalisé une opération de déclenchement.

6. Support de stockage, stockant un programme informatique, dans lequel le programme informatique, lorsqu'il est exécuté, est configuré pour réaliser le procédé selon l'une des revendications 1 à 5.

7. Dispositif électronique, comprenant :

une mémoire, et

un processeur,

dans lequel la mémoire stocke un programme informatique, et le processeur est configuré pour exécuter le programme informatique pour réaliser le procédé selon l'une des revendications 1 à 5.

Figure 1

Detect, by a terminal, a sound triggering event within a range for sound-source detection, where the range for sound-source detection is in a virtual scene and corresponds to a first virtual object, and sound-source feature information that matches a sound-source triggering a sound is carried in the sound triggering event ⟶ S202

Determine, by the terminal according to the sound-source feature information, a sound-source position at which the sound-source is located, after detecting the sound triggering event, and obtain, by the terminal, a first transmission distance between the sound-source position and a first position at which the first virtual object is located ⟶ S204

Determine, by the terminal according to the first transmission distance, a target sound to be generated at the first position by the sound-source ⟶ S206

Generate, by the terminal, the target sound at the first position in the virtual scene ⟶ S208

Figure 2

Figure 3

Target sound ↑    Sound-source with high pitch

First transmission distance

Target sound ↑    Sound-source with low pitch

First transmission distance

Figure 4

Figure 5

Target sound — Square

First transmission distance

Target sound — Underwater

First transmission distance

Target sound — Dessert

First transmission distance

Target sound — Grassland

First transmission distance

Figure 6

Target sound

First curve

Second curve

First transmission distance

Figure 7

Figure 8

Apparatus for sound
reproduction

Figure 9

1006    1002

| Display | User interface | Processor | Transmission apparatus |

1008

1010

Memory 1004

Figure 10

**EP 3 750 608 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2018101359607
- US 20040110561 A1
- EP 1994969 A1
- EP 2332622 A2
- JP 2011028169 A